# EUROPEAN PATENT APPLICATION

(11) **EP 4 395 058 A1**
(43) Date of publication of application: **03.07.2024**
(21) Application number: 22947585.0
(22) Date of filing: 17.08.2022
(51) Int. Cl.: H01M 50/593, H01M 50/588, H01M 50/502

(54) **BATTERY AND ELECTRIC APPARATUS**

(30) Priority: 22.06.2022 CN 202221567434 U
(71) Applicant: Contemporary Amperex Technology Co., Limited, Ningde, Fujian 352100 (CN)
(72) Inventor: LI, Xing, Ningde, Fujian 352100 (CN); NIU, Shaojun, Ningde, Fujian 352100 (CN); LI, Zhenhua, Ningde, Fujian 352100 (CN); XU, Liangfan, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2022/113048
(87) International publication number: WO 2023/245844

(57) **Abstract**

The present application relates to a battery and a power consuming device, the battery comprising: a box body internally having an accommodating cavity; a battery pack arranged in the accommodating cavity; and a conductive component arranged in the accommodating cavity and comprising at least one of a bus component, a signal transmission component, and a power output component of the battery pack, wherein the external part of at least one of the bus component, the signal transmission component, and the power output component is at least partially wrapped with an insulating medium. The battery and the power consuming device provided by the present application can prevent a failure problem due to high voltage caused by the thermal runaway of a battery cell, such that the battery and the power consuming device have a better safety performance.

## Description

### Cross-Reference to Related Applications

The present application refers to Chinese patent application No. CN 2022215674346, filed on June 22, 2022 and entitled "BATTERY AND POWER CONSUMING DEVICE", which is incorporated herein by reference in its entirety.

### Technical Field

The present application relates to the technical field of batteries, and more particularly to a battery and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

When a battery cell in a traditional battery undergoes thermal runaway, high-voltage ignition is easily caused, resulting in failure of a battery.

### Summary of the Invention

In view of the above problems, the present application provides a battery and a power consuming device, which can prevent a failure problem due to high voltage caused by the thermal runaway of a battery cell, such that the battery and the power consuming device have a better safety performance.

In a first aspect, the present application provides a battery, comprising:
a box body internally having an accommodating cavity;
a battery pack arranged in the accommodating cavity;
a conductive component arranged in the accommodating cavity and comprising at least one of a bus component, a signal transmission component, and a power output component of the battery pack; and
the external part of at least one of the bus component, the signal transmission component, and the power output component is at least partially wrapped with an insulating medium having a melting point in a range of greater than 200°C and less than or equal to 1,300°C.

In the present application, the external part of at least one of the bus component, the signal transmission component, and the power output component is at least partially wrapped with an insulating medium having a melting point in a range of greater than 200°C and less than or equal to 1,300°C. The insulating medium with a melting point in this range will not melt during thermal runaway. When a battery cell undergoes thermal runaway, due to a undergoes effect of the insulating medium, even if a conductive medium is overlapped between the conductive components provided with the insulating medium, and/or between the conductive components provided with the insulating medium and other conductive components not provided with the insulating medium, and/or between the conductive components provided with the insulating medium and other charged components other than the conductive components, connection in series will not be formed to cause high-voltage ignition, such that the safety performance and the service life of a battery can be improved.

In an embodiment, the conductive component comprises the bus component, the signal transmission component, and the power output component, and the voltages on the bus component and the signal transmission component are both less than voltage on the power output component.

The external part of at least one of the power output component, the signal transmission component, and the bus component is completely wrapped with the insulating medium.

The external part of at least one of the power output component, the signal transmission component, and the bus component is completely wrapped with the insulating medium. Therefore, even if the insulating layer outside the power output component and/or the signal transmission component is melted, the exposed bare cell is protected by the insulating medium, so as to prevent the conductive medium from being overlapped between the bare cells of the power output components and the bare cells of the signal transmission components and/or being overlapped on the bare cell of the power output component and the bus component to cause high-voltage ignition, such that the battery has a better safety performance.

In an embodiment, the external parts of the power output component, the signal transmission component, and the bus component are completely wrapped with the insulating medium.

With this design, even if the conductive medium is overlapped between any two of the bus component, the power output component, and the signal transmission component, the electrical conduction between any two of the bus component, the power output component, and the signal transmission component cannot be achieved, such that high-voltage ignition can be avoided.

In an embodiment, the battery pack comprises several battery cells arranged in a preset direction;
each of the battery cells has an outer end face provided with post terminals; and an insulating medium is laid on the outer end surface of each of the battery cells.

The outer end faces of any two adjacent battery cells are electrically isolated by the insulating medium laid on the outer end face of each of the battery cells, such that the outer end faces of the battery cells can be prevented from being connected in series to cause high-voltage ignition.

In an embodiment, the outer end faces of all the battery cells are combined to form an output end face of the battery pack, and an infiltration space is jointly enclosed by the output end face and inner walls of the box body facing the output end face; and
the power output component and the bus component are both arranged in the infiltration space, which is filled with the insulating medium.

With this design, the post terminal, the conductive medium sprayed by means of a pressure relief mechanism, the power output component, and the bus component can be wrapped by the insulating medium to prevent the conductive medium from being overlapped between the post terminal and the outer end face, and/or lapped between the bare cell of the power output component and the bus component, and/or overlapped between the power output component and the bare cell of the signal transmission component, so as to avoid the overlapping of the conductive medium to cause high-voltage ignition.

In an embodiment, the mass of the battery is Gi, and the mass of the insulating medium is G₂, G₂ meeting the following condition: G2 ≤ 0.1 G₁.

By setting G₂ to meet the following condition: G₂ ≤ 0.1 G₁., on the premise of ensuring that the battery has a higher energy density, the electric isolation between the conductive components can be realized, which is conducive to improvement in the working reliability of the battery cells.

In an embodiment, G₂ meets the following condition: G₂ ≤ 0.01 G₁.

By setting G₂ ≤ 0.01 G₁, The high energy density of the battery can be ensured while meeting the demand for electric isolation.

In an embodiment, the volume of the battery is Vi, and the volume of the insulating medium is V₂, V₂ meeting the following condition: V₂ ≤ 0.25 V₁.

By setting G₂ to meet the following condition: V₂ ≤ 0.25 V₁, on the premise of ensuring that the battery has a higher energy density, the electric isolation between the conductive components can be realized, which is conducive to improvement in the safety performance of the battery cells.

In an embodiment, V₂ meets the following condition: V₂ ≤ 0.1 V₁.

By setting V₂≤ 0.1 V₁, the high energy density of the battery can be ensured while meeting the demand for electric isolation.

In an embodiment, the insulating medium has a melting point in a range of greater than 250°C and less than or equal to 700°C.

By setting the melting point range of the insulating medium to be within the range of greater than 250°C and less than or equal to 700°C, it can be ensured that the insulating medium can still be wrapped around the external part of at least one of the bus component, the signal transmission component, and the power output component of the battery pack during the working of the battery, thereby ensuring the reliability of the electric isolation. In addition, the insulating medium having a melting point within this range further has a low manufacturing cost, which is conducive to reduction in a production cost of the battery.

In an embodiment, the insulating medium is a halogenated alkane.

The halogenated alkane has an excellent thermal stability and a low price, thereby contributing to reducing a manufacturing cost of the battery.

In a second aspect, the present application provides a power consuming device comprising the battery of the above embodiment, wherein the battery is configured to supply electric energy to the power consuming device.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference signs throughout the accompanying drawings. In the accompanying drawings:
Fig. 1 is a schematic diagram of a vehicle according to some embodiments of the present application;
Fig. 2 is an explosive view of a battery according to some embodiments of the present application;
Fig. 3 is a cross-section diagram of a battery according to some embodiments of the present application;
Fig. 4 is a structural schematic diagram of the cooperation between a bus component and a battery pack according to some embodiments of the present application; and
Fig. 5 is an explosive view of a battery cell according to some embodiments of the present application.

### List of reference signs:

1000. vehicle;
100. battery; 200. controller; 300. motor;
10. box body; 11. first portion; 12. second portion; 13. accommodating cavity; 14. infiltration space;
20. battery pack; 21. battery cell; 211. end cap; 2111. outer end face; 212. housing; 213. post terminal; 214. electrode assembly; 215. pressure relief mechanism; 30. bus component; 40. power output component.

### Detailed Description of Embodiments

In order to make the above objectives, features and advantages of the present application more clearly understood, particular embodiments of the present application will be described in detail below with reference to the accompanying drawings. In the following description, numerous specific details are set forth in order to provide a thorough understanding of the present application. However, the present application can be implemented in many other ways different from those described herein, and those skilled in the art can make similar improvements without departing from the essence of the present application. Therefore, the present application is not limited by the particular embodiments disclosed below.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. In the description of the present application, the meaning of "a plurality of" is at least two, such as two, three and so on, unless otherwise specifically defined.

In the present application, unless otherwise explicitly specified and defined, the terms such as "mounting", "connection", "connected" and "fixing" should be interpreted broadly, for example, either fixed or detachable connection, or integration; or may be a mechanical connection or an electrical connection; or may be a direct connection or an indirect connection through an intermediate medium, or may be internal communication between two elements or interaction between two elements, unless it may be clearly defined otherwise. For those of ordinary skill in the art, the specific meanings of the foregoing terms in the present application may be understood according to specific circumstances.

In the present application, unless otherwise explicitly specified and defined, the expression of a first feature being "on" or "under" a second feature may be the case that the first feature is in direct contact with the second feature, or the first feature is in indirect contact with the second feature via an intermediate medium. Moreover, the first feature being "on", "above", and "over" the second feature may be the first feature being directly above or obliquely above the second feature, or simply mean that the first feature is at a higher level than the second feature. The first feature being "under", "below" and "underneath" the second feature may be the first feature being right below or obliquely below the second feature, or only means that the level height of the first feature being less than that of the second feature.

At present, from the perspective of the development of the market situation, batteries are used more and more widely. The batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of batteries, the market demand for the batteries is also expanding.

The inventors have noted that during an actual use process, when a battery cell in a battery undergoes thermal runaway, high-voltage ignition is easily caused, resulting in failure of a battery.

The inventors found through intensive research that one of the reasons of high-voltage ignition of the battery is that when the battery cell undergoes thermal runaway, the conductive medium sprayed from the interior of the battery cell is easy to contact with the conductive components and overlapped between the conductive components, and/or overlapped between the conductive components and other charged components other than the conductive components to connect in series to cause high-voltage ignition, such that the safety performance of the battery is seriously reduced.

In order to alleviate the problem of high-voltage ignition caused by the thermal runaway of the battery cell, he applicants have found through intensive research that a battery is designed, the battery comprising a box body, a battery pack, and a conductive component, wherein the box body has an accommodating cavity, the battery pack and the conductive component are both arranged in the accommodating cavity, the conductive component at least comprises at least one of the bus component, the signal transmission component, and the power output component of the battery pack, and the external part of at least one of the bus component, the signal transmission component, and the power output component is at least partially wrapped with an insulating medium. Due to the barrier effect of the insulating medium, even if a conductive medium is overlapped between the conductive components provided with the insulating medium, and/or between the conductive components provided with the insulating medium and other conductive components not provided with the insulating medium, and/or between the conductive components provided with the insulating medium and other charged components other than the conductive components, connection in series will not be formed, such that high-voltage ignition can be avoided, and the safety performance and the service life of the battery can be improved.

The battery disclosed in the embodiments of the present application may be used in, but not limited to, a power consuming device such as a vehicle, a ship or an aircraft. A power system provided with the power consuming device composed of the battery disclosed by the present application, etc., can be used, which is conducive to reducing the risk of high-voltage ignition of the battery, and improving the safety performance and the service life of the battery.

The embodiments of the present application provide a power consuming device using a battery as a power supply. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

For convenience of description of the embodiments below, an embodiment in which a power consuming device according to an embodiment of the present application refers to a vehicle used for description in the following embodiments.

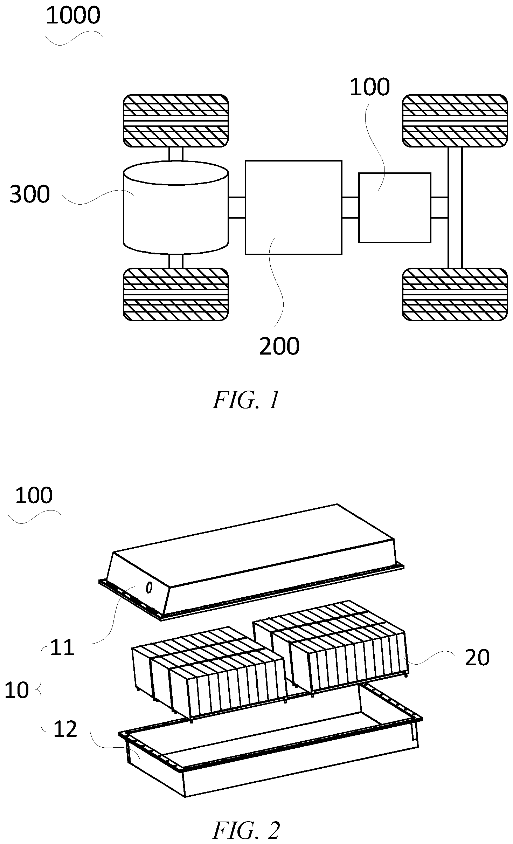

Referring to Fig. 1, Fig. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

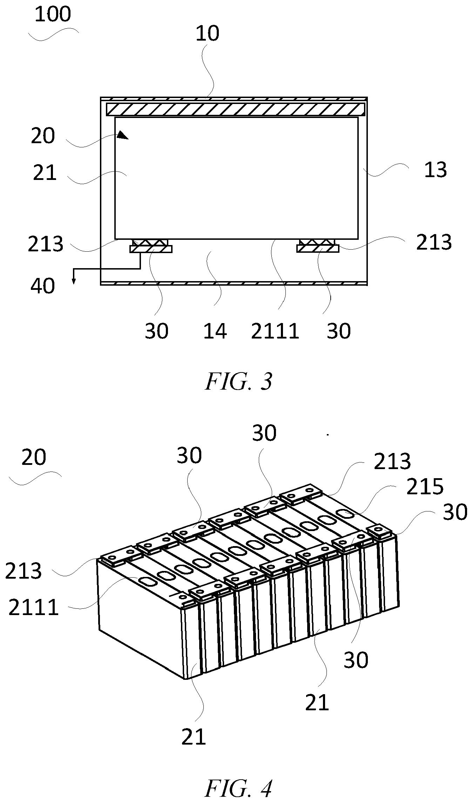

Referring to Figs. 2, 3, and 4, Fig. 2 is an explosive view of a battery 100 provided by some embodiments of the present application; Fig. 3 is a cross-section diagram of a battery 100 provided by some embodiments of the present application; and Fig. 4 is a structural schematic diagram of the cooperation between a bus component 30 and a battery pack 20 according to some embodiments of the present application. The battery 100 comprises a box body 10, a battery pack 20, and a conductive component.

The box body 10 has an accommodating cavity 13. The box body 10 is configured to provide an accommodating space for the battery pack 20 and the conductive component, and the box body 10 may have various structures. In some embodiments, the box body 10 may include a first portion 11 and a second portion 12, the first portion 11 and the second portion 12 are fitted together in a covering manner, and the first portion 11 and the second portion 12 jointly define to form the accommodating cavity 13. The second portion 12 may be a hollow structure with one side open, the first portion 11 may be a plate-shaped structure, and the first portion 11 is fitted to the open side of the second portion 12 in a covered manner, such that the first portion 11 and the second portion 12 jointly define to form the accommodating cavity 13. The first portion 11 and the second portion 12 may also each be of a hollow structure with one side open, and the open side of the first portion 11 is fitted to the open side of the second portion 12 in a covered manner. Of course, the box body 10 formed by the first portion 11 and the second portion 12 may have various shapes, such as a cylinder and a cuboid.

The battery pack 20 is arranged in the accommodating cavity 13 and comprises several battery cells 21 arranged in a preset direction. One or more battery packs 20 may be provided. In some embodiments, a plurality of battery packs are provided, and the battery 100 provided with a plurality of the battery pack 20 has a higher energy density. In each of the battery packs 20, a plurality of battery cells 21 may be provided, a plurality of the battery cells 21 may be connected in series, or connected in parallel, or connected in series and parallel to form the battery pack 20, and all the battery packs 20 may be connected in series, or connected in parallel, or connected in series and parallel to form a battery assembly and are accommodated in the accommodating cavity 13 of the box body 10.

Each of battery cells 21 may be a secondary battery 100 or a primary battery 100; and may further be a lithium-sulfur battery 100, a sodium-ion battery 100, or a magnesium-ion battery 100, but is not limited thereto. The battery cell 21 may be in the shape of a cylinder, a flat body, a cuboid, etc.

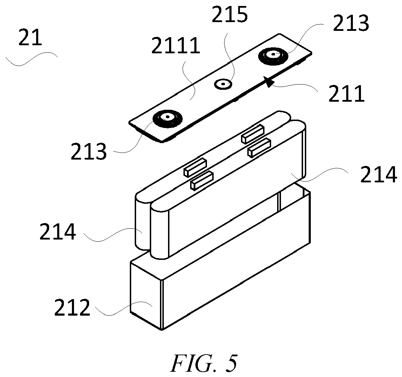

Referring to Fig. 5, Fig. 5 is an exploded view of a battery cell 21 provided by some embodiments of the present application. The battery cell 21 refers to the smallest unit of the battery 100. As shown in Fig. 5, the battery cell 21 comprises an end cap 211, a housing 212, an electrode assembly 214, and other functional components.

The end cap 211 refers to a component that is fitted to an opening of the housing 212 in a covered manner to isolate the internal environment of the battery cell 21 from the external environment. Without limitation, the shape of the end cap 211 may be adapted to that of the housing 212 to match the housing 212. In some embodiments, the end cap 211 may be made of a material (for embodiment, an aluminum alloy) with a certain hardness and strength. In this way, the end cap 211 is less prone to deformation when subjected to compression and collision, such that the battery cell 21 may have a higher structural strength and improved safety performance. A functional component, such as a post terminal 213, may be provided on the end cap 211. The post terminal 213 may be configured to be electrically connected to the electrode assembly 214, so as to output or input an electric energy of the battery cell 21. In some embodiments, the end cap 211 may further be provided with a pressure relief mechanism 215 for releasing the internal pressure when the internal pressure or temperature of the battery cell 21 reaches a threshold value. The end cap 211 may also be made of various materials, such as copper, iron, aluminum, stainless steel, an aluminum alloy, plastic, etc., which will not be specially limited in the embodiments of the present application.

The housing 212 is an assembly that is configured to fit with the end cap 211 so as to create the internal environment of the battery cell 21, wherein the created internal environment may be used for accommodating the electrode assembly 214, an electrolyte solution, and other components. The housing 212 and the end cap 211 may be separate components, the housing 212 may be provided with an opening, and the internal environment of the battery cell 21 is formed by making the end cap 211 cover the opening at the opening. Without limitation, the end cap 211 and the housing 212 may also be integrated with each other. Specifically, the end cap 211 and the housing 212 may form a common connection face before other components are inserted into the housing. When the interior of the housing 212 needs to be packaged, the end cap 211 then covers the housing 212. The housing 212 may have various shapes and various sizes, for example, in the form of a cuboid, a cylinder, a hexagonal prism, etc. Specifically, the shape of the housing 212 may be determined depending on the specific shape and size of the electrode assembly 214. The housing 212 may be made of various materials, such as copper, iron, aluminum, stainless steel, an aluminum alloy, plastic, etc., which is not particularly limited in the embodiments of the present application.

The electrode assembly 214 is a component where an electrochemical reaction occurs in the battery cell 21. The housing 212 may internally comprise one or more electrode assemblies 214. The electrode assembly 214 is mainly formed by winding or stacking a positive electrode plate and a negative electrode plate, and a separator is generally arranged between the positive electrode plate and the negative electrode plate. The positive electrode plate and the negative electrode plate respectively both comprise a current collector and an active substance layer arranged on the current collector. The active substance layer on the positive electrode plate and the active substance layer on the negative electrode plate react with an electrolyte solution, such that charging/discharging can be achieved.

The conductive component is arranged in the accommodating cavity 13 and comprise at least one of the bus component 30, the signal transmission component, and the power output component 40 of the battery pack 20. The external part of at least one of the bus component 30, the signal transmission component, and the power output component 40 is at least partially wrapped with an insulating medium having a melting point in a range of greater than 200°C and less than or equal to 1,300°C.

The bus component 30 of the battery pack 20 refers to a component that achieves electrical connection between different battery cells 21 connected in series, or connected in parallel, or connected in series and parallel, such that all the battery cells 21 located inside the battery 100 can be connected to form a battery assembly and provide a circulation path for current.

Specifically, any two battery cells 21 located in the same battery pack 20 and/or two different battery packs 20 may be connected in series, in parallel, or in series and parallel via the bus components 30, and any two adjacent battery packs 20 may also be connected in series, in parallel, or in series and parallel via the bus components 30.

The power output component 40 of the battery pack 20 refers to a component that enables outputting current to the outside through the battery assembly formed by connecting all the battery cells 21 in all the battery packs 20 inside the battery 100 via the bus component 30 to output current to the outside.

For example, the power output components 40 may be a positive electrode high-voltage output harness and/or a negative electrode high-voltage output harness. The battery assembly located inside the battery 100 outputs current to the outside through the high-voltage output harness and/or the negative electrode high-voltage output harness.

A signal refers to other information related to the battery cells 21 other than the current, and for example, the signal may comprise temperature information of the battery pack 20, voltage information of the battery pack 20, etc. The battery 100 is also internally provided with a signal acquisition component for acquiring signals of the battery pack 20, and the signal acquisition component is used for acquiring a temperature signal, a voltage signal, etc. of the battery pack 20 in the battery 100 and transmitting the signals to a terminal.

The signal transmission component refers to a component electrically connected between the signal acquisition component and the terminal, and can transmit the signals acquired by the signal acquisition component to the terminal.

For example, the signal transmission component may be a low-voltage harness, and the voltage of the low-voltage harness is smaller than that of the positive electrode high-voltage harness and the negative electrode high-voltage harness. The signal acquisition part located inside the battery 100 feeds back the acquired signals to the terminal through the low-voltage harness.

The insulating medium wrapped around the external part of at least one of the bus component 30, the signal transmission component, and the power output component 40 is an insulating medium different from its own insulating layer. Taking the signal transmission component as the low-voltage harness as an example, the insulating medium is a member different from the insulating layer wrapped outside a bare cell of the low-voltage harness.

The insulating medium may be liquid, semi-solid, solid, etc. In some embodiments, the insulating medium is at least one of a liquid insulating medium and a semi-solid insulating medium. The liquid insulating medium and the semi-solid insulating medium have a certain adhesion and fluidity, such that the insulating medium can be conveniently coated on the conductive component, or the insulating medium can conveniently infiltrate the conductive medium, and the insulating medium is simpler to arrange. For example, the liquid insulating medium is an insulating oil.. For example, the semi-solid insulating medium is an insulating gel.

In the present application, since the external part of at least one of the bus component 30, the signal transmission component, and the power output component 40 is at least partially wrapped with the insulating medium having a melting point in a range of greater than 200°C and less than or equal to 1,300°C. The insulating medium with a melting point in this range will not melt during thermal runaway. In this way, when the battery cell undergoes thermal runaway, due to the blocking effect of the insulating medium, even if the conductive medium is overlapped between the conductive components provided with the insulating medium, and/or between the conductive components provided with the insulating medium and other conductive components not provided with the insulating medium, and/or between the conductive components provided with the insulating medium and other charged components other than the conductive components, connection in series will not be formed, such that high-voltage ignition can be avoided, and the safety performance of the battery 100 and the service life of the battery 100 can be improved.

By referring Figs. 2, 3, and 5 again, in some embodiments of the present application, the conductive component comprises the bus component 30, the signal transmission component, and the power output component 40, wherein the voltages of the bus component 30 and the signal transmission component are both less than the voltage of the power output component 40, and the external part of at least one of the power output component 40, the signal transmission component, and the bus component 30 are completely wrapped with the insulating medium.

Specifically, any two adjacent battery cells 21 in the same battery pack 20 are electrically connected via the bus component 30, output ends of all the battery packs 20 are all electrically connected to the power output components 40, the battery 100 further comprises a signal acquisition component arranged on the battery pack 20, and the signal transmission component is electrically connected between the signal acquisition component and the terminal.

The bus component 30 is configured to provide electrical connection for circuit construction inside the battery pack 20, and the bus component 30 is generally a metal sheet. A plurality of the bus components 30 are provided, and the specific number can be determined according to the total number of the battery cells 21. In the same battery pack 20 and/or in different battery packs 20, the post terminals 213 of any two battery cells 21 can be electrically connected via the bus component 30.

The power output component 40 is configured to provide an electrical connection for circuit output of the battery cells 21. The power output components 40 may comprise two harnesses, namely the positive electrode high-voltage harness and the negative electrode high-voltage harness. The positive electrode high-voltage harness is electrically connected to a positive electrode output end of the battery assembly, and the negative electrode high-voltage harness is electrically connected to a negative electrode output end of the battery assembly to form a path for a high-voltage current to flow.

The signal transmission component is configured to provide an electrical connection for signal transmission of the battery pack 20 and are generally a wire. Each of signal acquisition components is electrically connected with the terminal via the signal transmission component so as to feed back the acquired signals to the terminal. The number of the signal transmission components is set in one-to-one correspondence according to the number of the signal acquisition components.

Specifically, the voltages of the positive electrode high-voltage harness and the negative electrode high-voltage harness are both high voltages, while the voltages of each of the bus components 30 and each of signal transmission components are all low voltages.

In some cases, when the battery cells 21 undergo thermal runaway, since the sprayed conductive medium has a high temperature, the respective external insulating layers on the power output components 40 and the signal transmission components are easily melted at a high temperature, resulting in that the bare cells of the power output components and the signal transmission components are exposed inside the box body 10. When the conductive medium is overlapped between the bare cells of the power output components 40 and the bare cells of the signal transmission components, and/or overlapped between the bare cells of the power output components 40 and the bus components 30, it is likely to cause high voltage to form on the bus components 30 and the signal transmission components to cause high-voltage ignition.

In the present application, the external part of at least one of the power output component 40, the signal transmission component, and the bus component 30 is completely wrapped with the insulating medium. Therefore, even if the insulating layer outside the power output component 40 and/or the signal transmission component is melted, the exposed bare cell is also protected by the insulating medium, so as to prevent the conductive medium from being overlapped between the bare cell of the power output component 40 and the bare cell of the signal transmission component and/or being overlapped between the bare cell of the power output component 40 and the bus component 30 to cause high-voltage ignition, such that the battery 100 has a better safety performance.

In some embodiments of the present application, the external parts of the bus components 30, the power output components 40, and the signal transmission components are completely wrapped with the insulating medium.

Specifically, the external parts of all the bus components 30, all the power output components 40, and all the signal transmission components are all wrapped with the insulating medium. Any two of the bus components 30, the power output components 40, and the signal transmission components may be electrically isolated by the insulating medium.

With this design, even if the conductive medium is overlapped between any two of the bus component 30, the power output component 40, and the signal transmission component, electrical conduction between any two of the bus component 30, the power output component 40, and the signal transmission component cannot be achieved, such that high-voltage ignition can be avoided.

In some embodiments of the present application, the battery pack 20 comprises several battery cells 21 arranged in a preset direction; each of the battery cells 21 has an outer end face 2111 provided with a post terminal 213; and the outer end face 2111 of each of the battery cells 21 is laid with the insulating medium.

It can be understood that the outer end face 2111 refers to an end face of the end cap 211 facing away from the housing 212 in the battery cell 21. The post terminal 213 in each battery cell 21 is protrudes from the outer end face 2111, the outer end face 2111 being further provided with a pressure relief mechanism 215. When the battery cell 21 undergoes thermal runaway, the conductive medium is sprayed out of the battery cell 21 from the pressure relief mechanism 215.

Since the pressure relief mechanism 215 is arranged on the outer end face 2111, the sprayed conductive medium is likely to accumulate on the outer end face 2111, and overlapped between the post terminal 213 and the outer end face 2111, such that the outer end face 2111 is charged. In addition, the conductive medium may be further overlapped between the two charged outer end faces 2111 in the two adjacent battery cells 21 to cause the two adjacent battery cells 21 to be connected in series. Furthermore, the battery cells 21 connected in series continue to be connected in series via the conductive medium, such that high-voltage ignition is caused and the safety performance of the battery 100 is reduced.

However, the outer end faces 2111 of any two adjacent battery cells 21 are electrically isolated by the insulating medium laid on the outer end face 2111 of each of the battery cells 21, such that the outer end faces 2111 of the battery cells 21 can be prevented from being connected in series to cause high-voltage ignition.

In some embodiments of the present application, the outer end faces 2111 of all the battery cells 21 are combined to form an output end face of the battery pack 20, and an infiltration space 14 is jointly enclosed by the output end face and inner walls of the box body 10 facing the output end face; and the power output components 40 and the bus components 30 are all arranged in the infiltration space 14, which is filled with the insulating medium is filled in the infiltration space 14.

It can be understood that when the power output components 40 and the bus components 30 are all in infiltrated in the infiltration space 14, and the pressure relief mechanism 215 and the post terminal 213 of each of the battery cells 21 are also infiltrated in the infiltration space 14. In addition, the output end face and the post terminal 213 are also infiltrated in the space.

With this design, the post terminals 213, the conductive medium sprayed by means of a pressure relief mechanism 215, the power output component 40, and the bus component 30 can be wrapped by the insulating medium to prevent the conductive medium from being overlapped between the post terminal 213 and the outer end face 2111, and/or overlapped between the bare cell of the power output component 40 and the bus component 30, and/or overlapped between the power output component 40 and the bare cell of the signal transmission component, so as to avoid the overlapping of the conductive medium to cause high-voltage ignition.

In some embodiments of the present application, the mass of the battery 100 is Gi, and the mass of the insulating medium is G₂, G₂ meeting the following condition: G₂ ≤ 0.1 G₁.

In the battery 100, the larger the mass proportion of a fire extinguishing agent, the smaller the mass proportion of the battery assembly that can be configured to supply energy, and then the lower the energy density of the battery 100 per unit mass.

By setting G₂to meet the following condition: G₂ ≤ 0.1 G₁, on the premise of ensuring that the battery 100 has a higher energy density, the electric isolation between the conductive components can be realized, which is conducive to improvement in the working reliability of the battery cells 21.

In some embodiments of the present application, G₂ meets the following condition: G₂ ≤ 0.01 G₁.

It is understood that the smaller the mass proportion of the insulating medium, the higher the energy density of the battery 100.

By setting G₂≤ 0.01 G₁, the high energy density of the battery 100 can be ensured while meeting the demand for electric isolation.

In some embodiments of the present application, the volume of the battery 100 is V₁, and the volume of the insulating medium is V₂, V₂ meeting the following condition: V₂ ≤ 0.25 V₁.

It can be appreciated that in the battery 100, the greater the volume proportion of the fire extinguishing agent, the smaller the volume proportion of the battery assembly that can be configured to supply energy, and then the lower the energy density of the battery 100 per unit mass.

By setting G₂ to meet the following condition: V₂ ≤ 0.25 V₁, on the premise of ensuring that the battery 100 has a higher energy density, the electric isolation between the conductive components can be achieved, which is conducive to improvement in the safety performance of the battery cells 21.

In some embodiments of the present application, V₂ meets the following condition: V₂ ≤ 0.1V₁.

It is understood that the smaller the volume proportion of the insulating medium, the higher the energy density of the battery 100.

By setting V₂ ≤ 0.1 V₁, the high energy density of the battery 100 can be ensured while meeting the demand for electric isolation.

In some embodiments of the present application, the insulating medium has a melting point in a range of greater than 250°C and less than or equal to 700°C.

During working, due to a higher internal temperature of the battery 100 , the insulating medium should have a higher melting point in order to avoid the abnormality caused by melting or deformation of the insulating medium..

By setting the melting point range of the insulating medium to be within the range of greater than 250°C and less than or equal to 700°C, it can be ensured that the insulating medium can still be wrapped around the external part of at least one of the bus component 30, the signal transmission component, and the power output component 40 of the battery pack 20 during the working of the battery 100, thereby ensuring the reliability of the electric isolation. In addition, the insulating medium having a melting point within this range further has a low manufacturing cost, which is conducive to reduction in a production cost of the battery 100.

In some embodiments of the present application, the insulating medium may be a halogenated alkane,
such as at least one oftrifluoroiodomethane, perfluoropropane, perfluorobutane, perfluorohexane, pentafluoroethane, 2-hydroheptafluoropropane, trifluoromethane, and hexafluoropropane.

The halogenated alkane has an excellent thermal stability and a low price, thereby contributing to reducing a manufacturing cost of the battery 100.

In some embodiments of the present application, the insulating medium may also be an inorganic substance, such as at least one of strontium titanate, tin oxide, cerium oxide, magnesium oxide, nickel oxide, calcium oxide, zinc oxide, zirconium dioxide, silicon dioxide, yttrium oxide, aluminium oxide, aluminum oxyhydroxide, aluminum hydroxide, titanium dioxide, silicon carbide, barium titanate, hafnium dioxide, magnesium hydroxide, and barium sulfate.

In some embodiments of the present application, the insulating medium may also be an organic substance, such as at least one of a phenolic resin, aramid fibers, a polycarbonate plastic, polyurethane, a transformer oil, a cable oil, a capacitor oil, a natural mineral oil, a silicone oil, and trichlorobiphenyl.

According to some embodiments of the present application, the present application further provides a power consuming device comprising the battery 100 according to any one of the above solutions. The battery 100 is configured to supply electric energy to the power consuming device.

The power consuming device may be any one of the foregoing devices or systems provided with the battery 100.

According to some embodiments of the present application, referring Figs. 3 and 4, the present application provides a battery 100, wherein the battery 100 comprises a box body 10, a battery pack 20, and conductive components. The box body 10 has an accommodating cavity 13, the battery pack 20 and the conductive components are all arranged in the accommodating cavity 13, wherein the conductive components comprise three types of a bus component 30, a signal transmission component, and a power output component 40 of the battery pack 20, and the external parts of the bus component 30, the signal transmission component, and the power output component 40 are completely wrapped with an insulating medium having a melting point in a range of greater than 200°C and less than or equal to 1,300°C. In this way, even if the conductive medium is overlapped between any two of the bus component 30, the power output component 40, and the signal transmission component, the electrical conduction between any two of the bus component 30, the power output component 40, and the signal transmission component cannot be achieved, such that high-voltage ignition can be avoided.

The various technical features of the above embodiments can be combined in any manner, and in order to simplify the description, not all possible combinations of the various technical features of the above embodiments are described. However, the technical features should be considered to be within the scope of the description in the description, as long as there is no conflict between the combinations of the technical features.

The embodiments described above merely illustrate several implementations of the present application and are described relatively specifically and in detail, but should not be construed as limiting the patent scope of the present application. It should be noted that those of ordinary skill in the art can make some variations and improvements without departing from the concept of the present application, and the variations and improvements fall within the scope of protection of the present application.

## Claims

1. A battery, comprising:
a box body (10) internally having an accommodating cavity (13);
a battery pack (20) arranged in the accommodating cavity (13); and
a conductive component arranged in the accommodating cavity (13) and comprising at least one of a bus component (30), a signal transmission component, and a power output component (40) of the battery pack (20), wherein
the external part of at least one of the bus component (30), the signal transmission component, and the power output component (40) is at least partially wrapped with an insulating medium having a melting point in a range of greater than 200°C and less than or equal to 1,300°C.

2. The battery according to claim 1, wherein the conductive component comprises the bus component (30), the signal transmission component, and the power output component (40), wherein the voltages on the bus component (30) and the signal transmission component are both less than the voltage on the power output component (40), and
the external part of at least one of the power output component (40), the signal transmission component, and the bus component (30) is completely wrapped with the insulating medium.

3. The battery according to claim 2, wherein the external parts of the power output component (40), the signal transmission component, and the bus component (30) are completely wrapped with the insulating medium.

4. The battery according to any one of claims 1-3, wherein the battery pack (20) comprise several battery cells (21) arranged in a preset direction;
each of the battery cells (21) has an outer end face (2111) provided with a post terminal (213); and the outer end face (2111) of each of the battery cells (21) is laid with the insulating medium.

5. The battery according to claim 4, wherein the outer end faces (2111) of all the battery cells (21) are combined to form an output end face of the battery pack (20), and an infiltration space (14) is jointly enclosed by the output end face and the inner wall of the box body (10) facing the output end face; and
the power output component (40) and the bus component (30) are both arranged in the infiltration space (14), which is filled with the insulating medium.

6. The battery according to any one of claims 1-5, wherein the mass of the battery is Gi, and the mass of the insulating medium is G₂, G₂ meeting the following condition: G₂ ≤ 0.1 G₁.

7. The battery according to claim 6, wherein G₂ meets the following condition: G₂ ≤ 0.01 G₁.

8. The battery according to any one of claims 1-7, wherein the volume of the battery is V₁, and the volume of the insulating medium is V₂, V₂ meeting the following condition: V₂ ≤ 0.25 V₁.

9. The battery according to claim 8, wherein V₂ meets the following condition: V₂ ≤ 0.1 V₁.

10. The battery according to any one of claims 1-9, wherein the insulating medium has a melting point in a range of greater than 250°C and less than or equal to 700°C.

11. The battery according to any one of claims 1-10, wherein the insulating medium is a halogenated alkane.

12. A power consuming device, comprising the battery according to any one of claims 1-11, the battery being configured to supply electric energy to the power consuming device.
